# EUROPÄISCHE PATENTANMELDUNG

(11) **EP 3 178 791 A1**
(43) Veröffentlichungstag der Anmeldung: **14.06.2017**
(21) Anmeldenummer: 15198686.6
(22) Anmeldetag: 09.12.2015
(51) Int. Cl.: C02F 1/02, C02F 1/74, C02F 103/36, C02F 101/34

(54) **AUFARBEITUNG DES ABWASSERS AUS DER ISOPHORON PRODUKTION DURCH DRUCKNASSOXIDATION**

(71) Anmelder: Evonik Degussa GmbH, 45128 Essen (DE)
(72) Erfinder: Chang, Yue Maleen, 64297 Darmstadt (DE); Kreczinski, Manfred, 44652 Herne (DE); Maier, Martin, 44625 Herne (DE); Woyciechowski, Matthias, 63505 Langenselbold (DE)

(57) **Zusammenfassung**

Die Erfindung betrifft die Aufarbeitung des Abwassers aus der Isophoron (IP) durch Drucknassoxidation.

## Beschreibung

Die Erfindung betrifft die Aufarbeitung des Abwassers aus der Isophoron (IP) durch Drucknassoxidation.

Aus der WO2012/076314 ist ein Verfahren zur Herstellung von Isophoron (3,5,5-Trimethyl-2-cyclohexen-1-on) bekannt.

Aus der WO2012/076314 und der WO 2012/156187 ist ein Verfahren zur Herstellung von Isophoron bekannt, wobei das Wasser aus dem Sumpf der destillative Aufarbeitung der wässrigen Fraktion einer Entspannungsverdampfung unterworfen wird und das entstehende gereinigte Wasser in den Prozess zur Herstellung von Isophoron zurückgeführt wird. Das entstandene Abwasser wird nicht weiter gereinigt.

Aus der EP Anmeldenummer 14195357.0-1351 ist ein Verfahren zur Aufarbeitung von verunreinigtem Abwasser aus der Herstellung von Isophoron (IP), Isophoronnitril (IPN) und Isophorondiamin (IPDA) beschrieben, wobei das Abwasser aus der Herstellung von Isophoron durch eine Oxidation aufgearbeitet werden kann.

Aufgabe war es, die Abwasserqualität im Gegensatz zum Stand der Technik zu verbessern.

Es wurde gefunden, dass die organischen Inhaltstoffe im Abwasser aus dem Abwasser der Isophoron Produktion durch eine Oxidation mit Sauerstoff aufgeschlossen werden können. Durch diese Drucknassoxidation kann die biologische Abbaubarkeit des Abwassers aus der IP Produktion wesentlich verbessert werden.

Gegenstand der Erfindung ist ein Verfahren zur Aufarbeitung des Abwassers aus der Isophoron Produktion durch Oxidation des alkalischen Abwassers bei einem pH-Wert von 8 bis 14 unter Einwirkung von Reinsauerstoff und/oder Sauerstoff in komprimierter Luft bei einem Druck von 5-50 bar.

Das Abwasser aus der Isophoron Produktion ist ein Abwasser, indem vielfältige organische komplexe Verbindungen enthalten sind. Dieses Abwasser ist stark basisch, weist meistens einen pH Wert von über 11 auf. Außerdem, ist das Abwasser biologisch nur beschränkt abbaubar, d.h. < 60%, auch nach langen Adaptionszeiten in der städtischen Kläranlagen. Im Stand der Technik wie in der WO2012/076314 und der WO 2012/156187, wird das Abwasser aus der Produktion wie dort beschrieben aufgearbeitet, und in die Kanalisation abgeleitet.

Es wurde gefunden, dass durch eine oxidative Behandlung unter Druck, Drucknassoxidation, organische komplexe Verbindungen im Abwasser aufgeschlossen und im hauptsächlich zu CO₂ und Wasser direkt teilweise und/oder vollständig oxidiert werden können.

### Beschreibung der Drucknassoxidation

Das Abwasser aus der Abwasserkolonne aus dem IP Produktionsprozess hat einem Systemdruck von 20 bis 40 bar und eine Temperatur von 200-300°C. Dieses Abwasser wird direkt oder nach geringer Abkühlung in einen Reaktor eingeleitet und unter Einwirkung von Reinsauerstoff und/oder Sauerstoff aus komprimierter Luft oxidativ behandelt. Der Oxidationsreaktor wird bei gleichem oder geringerem Druck betrieben wie der IP-Produktionsprozess. Der Sauerstoff (Rein- oder Luftsauerstoff) wird dem Oxidationsreaktor bei diesem Druck zugeführt. Dies geschieht zum Beispiel aus einem Druckgassystem oder mittels einer Druckerhöhung, z. B. durch Verdichter oder Kompressor. Die bevorzugte Druck im beträgt 20-40 bar, bevorzugt 30-36 bar. Die Temperatur liegt bis zu 50 K unter der Siedetemperatur bei dem vorherrschenden Druck. Die bevorzugte Arbeitstemperatur beträgt 150 - 250 °C. Das Abwasser wird in den Oxidationsreaktor eingeleitet und durch die Drucknassoxidation nach der erforderlichen Aufenthaltszeit von 0,5 bis 5 Stunden, bevorzugt 1 bis 3 Stunden oxidiert und danach aus der Kolonne ausgeschleust. Der Reinsauerstoff bzw. der Luftsauerstoff wird bevorzugt über eine Verteilvorrichtung, z. B. Lochböden, Verteilerrohre mit Löchern, Fritte im Sumpfbereich des Druckbehälters eingeleitet. Durch die Verteileinrichtung wird der Sauerstoff gleichmäßig im Reaktorraum verteilt wird, sodass der oxidative Umsatz vom Sauerstoff an organische Verbindungen gewährleistet. Zwischenböden können im Reaktor eingebaut werden, um die Kontakt von Sauerstoff und organischen Verbindung im Abwasser weitergehend zu ermöglichen, die hydraulischen Aufenthaltszeiten sicherzustellen und den oxidativen Umsatz zu maximieren.

Die Drucknassoxidation wird im starken alkalischen Bereich und bevorzugt ohne Katalysator betrieben. Der pH Bereich während der Oxidation variiert von pH 8 bis 14, bevorzugt von pH 11 bis 14. Der Reaktion kann zur Beschleunigung ein geeigneter Katalysator zugesetzt werden.

Die Drucknassoxidation kann ein- oder mehrstufig als Durchlaufprozess kontinuierlich oder als Batchprozess durchgeführt werden. Die hydraulische Aufenthaltszeit beträgt 0,5 bis 5 Stunden, bevorzugt 1 bis 3 Stunden oder länger nach Prozessbedarf. Ein mehrstufiges kontinuierliches Reaktorkonzept ist hier besonders bevorzugt, wobei mindestens zwei Reaktoren nacheinander angeordnet sind. Richtig? Bitte bearbeiten!

Bevorzugt wird die Oxidation des alkalischen Abwassers im Temperaturbereich von 150-250°C und bei einem pH-Wert von 11 bis 14 und bei einem Druck von 20-40 bar durchgeführt.

Die organischen Verbindungen werden in CO₂ und H₂O sowie in reduzierte organische Verbindungen umgewandelt. Nach der Drucknassoxidation kann das Wasser unter Nutzung des Energieinhaltes ohne Gefahr von Feststoffbildung abgekühlt werden.

Die reduzierten Verbindungen können somit für die Mikroorganismen besser verfügbar gemacht werden. Eine Verbesserung der biologischen Abbaubarkeit des IP Abwassers im Vergleich zu frisch anfallendem und nicht behandeltem IP-Abwasser beträgt bis zu 50 %, meistens um 10-20 %, gemessen nach Standardmessverfahren (Zahn-Wellens-Test DIN EN ISO 9888 bzw. OECD302B). Diese Verbesserungsrate trägt wesentlich zu einer verbesserten Umweltwirkung bei, bzw. erhöht die Produktionssicherheit im Fall veränderter behördlichen Auflagen zur umweltrelevanten Emissionsgenehmigung.

Sollten andere Abwässer zu IP Abwasser aus Schritt B) in die Oxidation hinzukommen, müssen entsprechende pH Anpassung zur Reaktion geprüft und berücksichtig werden. In dem vorhandenen Fall werden Abwässer aus der Produktion von IPN und/oder IPDA zu IP Abwasser zugeleitet. Da sowohl gebundene als auch freie Cyanide in Abwässer von IPN und IPDA vorhanden sind, muss die bei pH > 9,5 erfolgen, sodass kein HCN Gase während der Oxidation ausgestrippt wird.

## Patentansprüche

1. Verfahren zur Aufarbeitung des Abwassers aus der Isophoron Produktion durch Oxidation des alkalischen Abwassers bei einem pH-Wert von 8 bis 14 unter Einwirkung von Reinsauerstoff und/oder Sauerstoff in komprimierter Luft bei einem Druck von 5-50 bar.

2. Verfahren nach Anspruch 1 **dadurch gekennzeichnet, dass** die Oxidation des alkalischen Abwassers bei einem pH-Wert von 11 bis 14 durchgeführt wird.

3. Verfahren nach mindestens einem der vorherigen Ansprüche, **dadurch gekennzeichnet, dass** die Oxidation des alkalischen Abwassers bei einem Druck von 20-40 bar, bevorzugt 30-36 bar, durchgeführt wird.

4. Verfahren nach mindestens einem der vorherigen Ansprüche, **dadurch gekennzeichnet, dass** die Oxidation des alkalischen Abwassers bei einer Arbeitstemperatur von 150 - 250 °C durchgeführt wird.

5. Verfahren nach mindestens einem der vorherigen Ansprüche, **dadurch gekennzeichnet, dass** die Aufenthaltszeit im Oxidationsreaktor während der Oxidation des alkalischen Abwassers von 0,5 bis 5 Stunden, bevorzugt 1 bis 3 Stunden, beträgt.

6. Verfahren nach mindestens einem der vorherigen Ansprüche, **dadurch gekennzeichnet, dass** die Oxidation des alkalischen Abwassers im Temperaturbereich von 150-250°C und bei einem pH-Wert von 11 bis 14 und bei einem Druck von 20-40 bar durchgeführt wird.

7. Verfahren nach mindestens einem der vorherigen Ansprüche, **dadurch gekennzeichnet, dass** die Oxidation des alkalischen Abwassers in Gegenwart eines Katalysators durchgeführt wird.

8. Verfahren nach mindestens einem der vorherigen Ansprüche, **dadurch gekennzeichnet, dass** der Reinsauerstoff und/oder der Sauerstoff in komprimierter Luft über eine Verteilvorrichtung im Sumpfbereich des Druckbehälters eingeleitet wird.

9. Verfahren nach mindestens einem der vorherigen Ansprüche, **dadurch gekennzeichnet, dass** der Reinsauerstoff und/oder der Sauerstoff in komprimierter Luft über eine Verteilvorrichtung ausgewählt aus Lochböden, Verteilerrohre mit Löchern, Fritte, im Sumpfbereich des Druckbehälters eingeleitet wird.
